Europäisches Patentamt

European Patent Office

Office européen des brevets

(19)

(11) Veröffentlichungsnummer: **0 044 051**
**B1**

(12) **EUROPÄISCHE PATENTSCHRIFT**

(45) Veröffentlichungstag der Patentschrift: **24.04.85**

(21) Anmeldenummer: **81105383.4**

(22) Anmeldetag: **10.07.81**

(51) Int. Cl.⁴: **C 08 J 3/12,  C 08 J 9/28,**
**B 01 J 20/26,  C 09 K 3/32,**
**C 09 K 17/00,  C 09 D 7/12,**
**A 61 L 9/04,  A 01 N 25/10,**
**C 04 B 38/08  // C08L23/12**

(54) **Poröse, pulverförmige Polymerteilchen.**

(30) Priorität: **15.07.80 DE 3026688**

(43) Veröffentlichungstag der Anmeldung:
**20.01.82 Patentblatt 82/03**

(45) Bekanntmachung des Hinweises auf die
Patenterteilung:
**24.04.85 Patentblatt 85/17**

(84) Benannte Vertragsstaaten:
**AT BE CH FR GB IT LI LU NL SE**

(56) Entgegenhaltungen:
**CH-A- 407 545**
**DE-A-1 694 038**
**DE-A-1 805 138**
**DE-A-1 808 341**
**DE-A-1 908 516**
**DE-A-2 737 745**
**NL-A-6 816 126**
**US-A-3 607 793**

(73) Patentinhaber: **Akzo GmbH**
**Postfach 10 01 49 Kasinostrasse 19-23**
**D-5600 Wuppertal-1 (DE)**

(72) Erfinder: **Lange, Wolfgang, Dr. Dipl.-Chem.**
**Rosenstrasse 12**
**D-8753 Obernburg (DE)**

Courier Press, Leamington Spa, England.

EP 0 044 051 B1

## Beschreibung

Die Erfindung betrifft poröse, pulverförmige Polymerteilchen, die eine große innere, von außen zugängliche Oberfläche besitzen, Verfahren zu deren Herstellung sowie die Verwendung derselben.

Es ist bekannt, Polymere wie z.B. Polypropylen mit poröser Struktur, insbesondere in Form von kompakten Körpern wie Platten, aber auch in Forme von Folien, Fäden und Hohlfäden herzustellen. So wird z.B. in der US—PS 3 607 793 ein Verfahren beschrieben, nach dem man, ausgehend von kleinen Polypropylenpartikelchen mit einer Größe von etwa 0,02 bis 0,5 µm und Lösen derselben in Kohlenwasserstoffen, zu porösen Filmen gelangen kann, wenn man die Abkühlung mit einer Geschwindigkeit von weniger als 100°C pro Minute durchführt.

Dieses Verfahren ist jedoch für die Herstellung von pulverförmigem, porösen Polypropylen nicht brauchbar. Versucht man nämlich poröse Strukturen, wie sie gemäß der Lehre der US—PS 3 607 703 erhalten werden, durch Zerkleinern in Pulverform zu überführen, so treten erhebliche Schwierigkeiten auf. So wird das Material, wenn man es z.B. mahlt, schmierig bzw. beginnt zu schmelzen. Auch durch intensives Kühlen läßt sich ein einwandfreies poröses pulverartiges Produkt nicht erhalten, da während des Mahlvorgangs die Strukturen zerquetscht und zerrisen werden. Auch läßt sich auf diese Weise kein Pulver mit einer günstigen Korngrößenverteilung bekommen.

Auch kompakte Polymermassen mit poröser Struktur, wie sie in der DE—OS 2 727 745 beschrieben werden, lassen sich auf diese Weise nur unter Schwierigkeiten pulverisieren und ergeben ein Pulver, das in vieler Hinsicht unbefriedigende Eigenschaften aufweist.

Selbst das Zerkleinern unter flüssigem Stickstoff führt nicht zu Pulvern mit voll zufriedenstellenden Eigenschaften. Einmal ist das Arbeiten mit flüssigem Stickstoff teuer, da energieintensiv, auch ist die starke Gasentwicklung auf Grund von verdampfendem Stickstoff lästig. Schließlich läßt es sich auch durch eine so intensive Kühlung, wie es durch Einsatz von flüssigem Stickstoff möglich ist, nicht vermeiden, daß an den Schnitt- oder Bruchflächen der Partikelchen sich fasrige Enden befinden, welche die Eigenschaften des Pulvers, z.B. die Rieselfähigkeit nachteilig beeinflussen.

In der DE—A—16 94 038 wird ein Verfahren zur Herstellung von Polymerteilchen beschrieben, bei dem ein Polymer mit einem Lösungsmittel in Kontakt gebracht wird, man die erhaltene Mischung unter Druck auf eine zur Lösung des Polymeren ausreichende Temperatur erhitzt und durch Abkühlen das Polymer aus der Lösung ausfällt. Der Einsatz eines Festbetts, das die Bildung der Struktur der pulverförmigen Teilchen beeinflussen soll, ist dieser Schrift nicht zu entnehmen.

In der CH—A—407 545 wird ein Verfahren zur Herstellung von feinen pulverartigen Teilchen aus synthetischen linearen Polymeren beschrieben, bei dem man einem Gel eine feste wasserlösliche Substanz, zum Beispiel ein Salz beimengt. Das Arbeiten mit einem Festbett, wodurch besonders vorteilhafte pulverförmige Teilchen zu erzielen sind, ist dieser Schrift nicht zu entnehmen.

Poröse, pulverförmige Substanzen können auf den verschiedensten Gebieten, z.B. bei der Adsorption, als Zusatz- oder Füllmittel oder dergleichen verwendet werden. Es besteht deshalb ein Bedürfnis nach solchen porösen Substanzen, insbesondere solchen mit verbesserten Eigenschaften sowie nach entsprechenden Herstellungsverfahren.

Aufgabe der Erfindung ist es deshalb, poröse, pulverförmige Polymerteilchen zur Verfügung zu stellen, die eine günstige Kornform und Korngrößenverteilung aufweisen und eine große innere, von außen zugängliche Oberfläche und eine gleichmäßige Porenstruktur besitzen und gut rieselfähig sind. Aufgabe der Erfindung ist ferner ein verbessertes Verfahren zum Herstellen derartiger Polymerteilchen, das insbesondere eine wirtschaftliche und einfache Herstellungsweise erlaubt. Aufgabe der Erfindung ist es ferner, besonders vorteilhafte Verwendungsmöglichkeiten derartiger Polymerteilchen aufzuzeigen, insbesondere als Träger von Substanzen zur Langzeitabgabe mit verbesserter Langzeitwirkung.

Diese Aufgabe wird durch ein Verfahren zur Herstellung von pulverförmigen, porösen Polymerteilchen gelöst, das dadurch gekennzeichnet ist, daß man ein homogenes Gemisch aus mindestens 2 Komponenten, wobei die eine Komponente ein schmelzbares Polymer und die andere Komponente ein gegenüber dem Polymeren inerte Flüssigkeit ist und beide Komponenten ein binäres System bilden, das im flüssigen Aggregatzustand einen Bereich völliger Mischbarkeit und einen Bereich mit Mischungslücke aufweist, bei einer Temperatur oberhalb der Entmischungstemperatur in ein Feststoffpartikelbett bringt, auf eine Temperatur unterhalb der Verfestigungstemperatur des Polymeren im Gemisch abkühlt, und die dabei erhaltene kuchenartige Masse zerkleinert und die polymere Substanz von der inerten Flüssigkeit und den Feststoffpartikeln abtrennt.

Vorzugsweise wird ein Feststoffpartikelbett aus Partikeln mit einer Größe von 50 bis 5000 µm verwendet. Sehr geeignet ist ein Feststoffpartikelbett aus Glaskügelchen. Als Feststoffpartikel kann man auch Salz verwenden, insbesondere Natriumsulfat; das Natriumsulfat weist zweckmäßig eine Körnung von 50 bis 400 µm auf.

Gemäß der Erfindung werden vorzugsweise Polymerteilchen aus Polypropylen hergestellt. Dabei kann als inerte Flüssigkeit NN-Bis-(2-hydroxyäthyl)-hexadecylamin verwendet werden.

Bei Einsatz von Glaskügelchen als Feststoffpartikelchen kann man der erhaltenen Kuchen zunächst extrahieren, sodann zerkleinern und die Glaskügelchen und die Polymerpartikel auf Grund ihrer Dichteunterschiede sichten. Das Sichten kann z.B. durch Aufschlämmen in Wasser geschehen.

Es ist möglich, den erhaltenen Kuchen zunächst zu zerkleinern und erst dann zu extrahieren; die umgekehrte Arbeitsweise ist ebenfalls möglich.

In einer besonders vorteilhaften Ausführungsform des erfindungsgemäßen Verfahrens wird der erhaltene Kuchen gleichzeitig zerkleinert und extrahiert.

In manchen Fällen kann man sogar den erhaltenen Kuchen gleichzeitig extrahieren, zerkleinern und die Feststoffpartikel lösen, so daß die Polymerteilchen übrig bleiben.

Nach dem Abtrennen der Polymerteilchen kann man diese durch Sieben in Korngrößenfraktionen aufteilen.

Gegenstand der Erfindung sind ferner poröse, pulverförmige Polymerteilchen mit einer scheinbaren Dichte von 0,1 bis 0,3 g/cm³, einem von außen zugänglichen Hohlraumvolumen von über 50, vorzugsweise über 70 % und einer Korngröße von 50 bis 700 μm, vorzugsweise von 50 bis 100 μm.

Die erfindungsgemäßen Teilchen eignen sich zum Abtrennen von hydrophoben Substanzen aus wäßrigen Systemen, insbesondere zum Abtrennen von Öl; sie können auf vorteilhafte Weise auch verwendet werden zum Aufsaugen von Flüssigkeiten, insbesondere als Ölbindemittel.

Sie sind ferner geeignet als Zusatz zu Anstrichmitteln, insbesondere zu Schutzanstrichmitteln.

Sie können besonders günstig auch als Träger von Substanzen zur Langzeitabgabe eingesetzt werden, wobei ihr Einsatz in der Land- und Fortwirtschaft sowie im Gartenbau besonders hervorzuheben ist.

Sie können mit Duftstoffen beladen werden wie Sexuallockstoffe für Insekten.

Eine weitere sehr vorteilhafte Verwendungsmöglichkeit ist der Einsatz der porösen, pulverförmigen Polymerteilchen als Betonaddive.

Die Herstellung der pulverförmigen, porösen Polymerteilchen kann im allgemeinen auf folgende Weise geschehen.

Es wird zunächst aus einem geeigneten Polymer und einer inerten Flüssigkeit durch Erhitzen ein homogenes, flüssiges Gemisch hergestellt. Als Polymer eignet sich insbesondere Polypropylen.

Weitere geeignete Polymere können der DE—OS 2 737 745 entnommen werden, in der auch geeignete inerte Flüssigkeiten erwähnt werden.

Die homogene Mischung wird sodann in ein geeignetes Feststoffpartikelbett gebracht. Dies kann z.B. auf die Weise geschehen, daß man auf einer entsprechenden Nutsche ein Feststoffpartikelbett aufbaut, wobei sich gegebenenfalls der Einsatz einer Stützfilterplatte empfiehlt. Das Feststoffpartikelbett ist zweckmäßig mit einer Lochplatte abgedeckt, die verhindern soll, daß während der Behandlung das Feststoffbett aufgewirbelt wird. Auf dieses Feststoffpartikelbett wird sodann die Schmelze gegossen; durch Anlegen eines Vakuums kann das Eindringen der Mischung gefördert werden. Das Feststoffpartikelbett wird auf eine Temperatur erwärmt, die oberhalb der Entmischungstemperatur des verwendeten Systems liegt. Sobald das Feststoffpartikelbett mit der homogenen Schmelze gesättigt ist, wird die Zugabe eingestellt; mit läßt erkalten und erhält dabei einen Kuchen von bröckeliger Konsistenz.

Dieser wird sodann zerkleinert und mit einem Extraktionsmittel behandelt, in dem die inerte Flüssigkeit löslich ist.

Die Feststoffpartikel und die polymeren, porösen Teilchen werden sodann getrennt. Dies kann auf mechanische aber auch auf chemische Weise geschehen.

In besonderen Fällen ist es möglich, ein Extraktionsmittel einzusetzen, daß gleichzeitig auch die Feststoffpartikel zur Lösung bringt.

So kann man z.B. bei der Verwendung von NN-Bis-(2-hydroxyäthyl)-hexadecylamin als inerte Flüssigkeit angesäuertes Wasser zum Extrahieren und zum Lösen des Feststoffpartikelbetts verwenden, wenn dieses aus einer löslichen Substanz, wie z.B. Natriumsulfat besteht.

Das Verfahren kann kontinuierlich durchgeführt werden, in dem man z.B. in ein aufgewärmtes Rohr gleichzeitig Feststoffpartikel, wie Salz und die homogene Mischung eindosiert. Das Gut wird sodann durch das Rohr weitergetrieben, wobei man während des Weges des Gemenges durch das Rohr die Temperatur erniedrigt. Nach Verlassen des Rohrs wird die Masse zerkleinert und extrahiert. Das Extraktionsmittel kann durch Filtration abgetrennt werden. Die extrahierte Masse wird sodann z.B. mit Wasser oder einem anderen Mittel behandelt und getrocknet.

Die erhaltene Polymerteilchen können, fals erfoderlich, noch durch Sichten wie Windsichten oder Sieben in einzelne Polymerteilchenfraktionen aufgeteilt werden.

Es war besonders überraschend, daß man gemäß der Erfindung poröse, pulverförmige Polymerteilchen auf eine besonders vorteilhafte, wirtschaftliche Weise erhalten kann. Die Polymerteilchen zeichnen sich durch eine günstige Körnchenform aus, sie sind sehr gut rieselfähig und besitzen ein sehr hohes von außen zugängliches Hohlraumvolumen sowie große innere von außen zugängliche Oberflächen.

Es ist möglich, durch Wahl des Feststoffpartikelbettes insbesondere durch Verwendung von Partikelchen mit geeigneter Korngröße auch die Korngröße des erhaltenen Polymerpulvers zu steuern. Besonders überraschend war, daß gemäß der Erfindung ein poröses Polymerpulver zugänglich ist, daß eine verbesserte Langzeitabgabenwirkung zeigt. Es wurde nämlich durch die Erfindung möglich, Polymerteilchen zu erhalten, die verschiedene Geschlossenheitsgrade bzw. Öffnungsgrade aufweisen, d.h. an ein und demselben Partikelchen wechseln sich Flächen mit sehr kleinen und Flächen mit größeren Öffnungen ab. Dies bedeutet, daß die Partikelchen, wenn sie mit Substanzen für die Langzeitabgabe beladen sind, diese Substanzen über einen längeren Zeitpunkt abgeben als Partikel, die auf ihrer ganzen Oberfläche mit größeren Poren besetzt sind.

Die erfindungsgemäßen Partikel eignen sich deshalb insbesondere für den Einsatz als Träger für Substanzen zur Langzeitabgabe auf dem Gebiet der Land- und Forstwirtschaft sowie im Gartenbau. Sie lassen sich gut versprühen.

Man kann diese Partikelchen mit Spurenelementen beladen; sie sind auch geeignet als Träger für Antifoulant, Molluscid, Insekticide, Herbicide, Fungicide, Rodenticide, Nematicide, Algecide, Repellents usw.

Besonders überraschend war es, daß sich die erfindungsgemäßen Polymerteilchen auch als Betonadditive einsetzen, wobei insbesondere Teilchen einer Korngröße von etwa 50—70 µm geeignet sind. Werden diese Polymerteilchen in vorzugsweise geringen Mengen Beton beigemischt, so zeigt dieser ein besonders günstiges Verhalten gegenüber Kälte, So wird vor allem die befürchtete Rißbildung, die beim Abbinden von Beton bei niedrigen Temperaturen auftreten kann, vermieden bzw. erheblich herabgesetzt.

Mit Hilfe des erfindungsgemäßen Verfahren kann man ferner den Porengehalt, d.h. den Anteil des Hohlraumvolumens der Partikel steuern, insbesondere, indem man den Anteil der inerten Flüssigkeit im homogenen Gemisch erhöht. Es werden deshalb vorzugsweise Gemische eingesetzt, die mindestens 70 % der inerten Flüssigkeit und höchstens 30 % des Polymeren enthalten.

Überraschend war ferner, daß die Pulver beim Einsatz, beispielsweise in der Landwirtschaft auf Pflanzenblättern gut haften bleiben, da sie offenbar auf Grund ihrer äußeren Struktur auf den Flächen der Pflanzen einen guten Halt finden. Aus diesem Grund ist es möglich, auf Pflanzen eine Schutzwirkung für längere Zeit aufrechtzuerhalten.

Die Erfindung wird durch folgendes Beispiel näher erläutert:

Beispiel

240 g NN-Bis-(2-hydroxyäthyl)-hexadecylamin + 60 g Polypropylen pph 1050 (schwarz 12), Hoechst AG werden auf 260°C unter Rühren im Glaskolben erhitzt. Die 260°C heiße Schmelze wird auf eine Nutsche mit 900 g auf 240°C erhitztes Natriumsulfat gegossen.

Durch Vakuumanlegen wird die heiße Schmelze in die Salzschicht eingezogen. Nach 2 Stunden ist der Schmelzekuchen erkaltet und wird unter Zugabe von Äthanol durch 2-minütiges Mahlen im Starmix zerkleinert. Das so erhaltene Gemenge wird abgenutscht. Mit Wasser wird das auf dem Filter zurückgebliebene Natriumsulfat gelöst und somit vom Pulver getrennt. Das getrocknete Pulver wird anschließend mit einem Rüttelsieb in die einzelnen Fraktionen aufgeteilt.

Das Pulver läßt sich wie folgt charakterisieren:
Teilchengröße:
Fraktion 1 400 µm (größer als) 2,05 %
Fraktion 2 315 µm (größer als) 0,54 %
Fraktion 3 200 µm (größer als) 5,40 %
Fraktion 4 100 µm (größer als) 42,28 %
Fraktion 5　50 µm (größer als) 39,70 %
Fraktion 6　50 µm (kleiner als) 10,03 %

Nach Bestimmung der scheinbaren Dichte wurde für die Fraktion 100—200 µm ein Porenvolumen von 57 % errechnet. Die größeren Teilchen haben einen höheren Volumenanteil.

**Patentansprüche**

1. Verfahren zur Herstellung von pulverförmigen, porösen Polymerteilchen, dadurch gekennzeichnet, daß man ein homogenes Gemisch aus mindestens 2 Komponenten, wobei die eine Komponente ein schmelzbares Polymer und die andere Komponente ein gegenüber dem Polymeren inerte Flüssigkeit ist und beide Komponenten ein binäres System bilden, das im flüssigen Aggregatzustand einen Bereich völliger Mischbarkeit und einen Bereich mit Mischungslücke aufweist, bei einer Temperatur oberhalb der Entmischungstemperatur in ein Feststoffpartikelbett bringt, auf eine Temperatur unterhalb der Verfestigungstemperatur des Polymeren im Gemisch abkühlt, und die dabei erhaltene kuchenartige Masse zerkleinert und die polymere Substanz von der inerten Flüssigkeit und den Feststoffpartikeln abtrennt.

2. Verfahren nach Anspruch 1, dadurch gekennzeichnet, daß man ein Feststoffpartikelbett aus Partikeln mit einer Größe von 50 bis 5000 µm verwendet.

3. Verfahren nach den Ansprüchen 1 bis 2, dadurch gekennzeichnet, daß man ein Feststoffpartikelbett aus Glaskügelchen verwendet.

4. Verfahren nach den Ansprüchen 1 bis 2, dadurch gekennzeichnet, daß man als Feststoffpartikel ein Salz verwendet.

5. Verfahren nach Anspruch 4, dadurch gekennzeichnet, daß man als Salz Natriumsulfat verwendet.

6. Verfahren nach Anspruch 5, dadurch gekennzeichnet, daß man Natriumsulfat mit einer Körnung von 50 bis 400 µm verwendet.

7. Verfahren nach den Ansprüchen 1 bis 6, dadurch gekennzeichnet, daß man als Polymer Polypropylen verwendet.

8. Verfahren nach Anspruch 7, dadurch gekennzeichnet, daß man als Polymer Polypropylen und als inerte Flüssigkeit NN-Bis-(2-hydroxyäthyl)-hexadecylamin verwendet.

9. Verfahren nach Anspruch 3, dadurch gekennzeichnet, daß man aus dem erhaltenen Kuchen die inerte Flüssigkeit extrahiert, den Kuchen zerkleinert und die Glaskügelchen und die Polymerpartikel auf Grund ihrer Dichteunterschiede sichtet.

10. Verfahren nach Anspruch 9, dadurch gekennzeichnet, daß man das Sichten durch Aufschlämmen in Wasser durchführt.

11. Verfahren nach Anspruch 1, dadurch gekennzeichnet, daß man den erhaltenen Kuchen zunächst zerkleinert und dann extrahiert.

12. Verfahren nach Anspruch 1, dadurch gekennzeichnet, daß man den erhaltenen Kuchen gleichzeitig zerkleinert und extrahiert.

13. Verfahren nach Anspruch 1, dadurch gekennzeichnet, daß man gleichzeitig den erhaltenen Kuchen extrahiert, die Feststoffpartikel löst und den Kuchen zerkleinert.

14. Verfahren nach den Ansprüchen 1 bis 13, dadurch gekennzeichnet, daß man die polymeren, pulverförmigen, porösen Teilchen nach Abtrennen der inerten Flüssigkeit und der Feststoffpartikel durch Sieben in Korngrößenfraktionen aufteilt.

15. Poröse, pulverförmige Polymerteilchen erhalten nach einem Verfahren gemäß den Ansprüchen 1 bis 14.

16. Poröse, pulverförmige Polymerteilchen mit einer scheinbaren Dichte von 0,1 bis 0,3 g/cm³, einem von außen zugänglichen Hohlraumvolumen über 50, vorzugsweise über 70 % und einer Korngröße von 50 bis 700 μm.

17. Poröse, pulverförmige Polymerteilchen nach den Ansprüchen 1 bis 16, gekennzeichnet durch eine Korngröße von 50 bis 100 μm.

18. Verwendung der porösen, pulverförmigen Polymerteilchen nach den Ansprüchen 15 bis 17 zum Abtrennen von hydrophoben Substanzen aus wäßrigen Systemen.

19. Verwendung der porösen, pulverförmigen Polymerteilchen nach Anspruch 18 zum Abtrennen von Öl.

20. Verwendung der porösen, pulverförmigen Polymerteilchen nach den Ansprüchen 15 bis 17 zum Aufsaugen von Flüssigkeiten.

21. Verwendung der porösen, pulverförmigen Polymerteilchen nach Anspruch 20 als Ölbindemittel.

22. Verwendung der porösen, pulverförmigen Polymerteilchen nach den Ansprüchen 15 bis 17 als Zusatz zu Anstrichmitteln.

23. Verwendung der porösen, pulverförmigen Polymerteilchen nach Anspruch 22 als Zusatz zu Schutzanstrichmitteln.

24. Verwendung der porösen, pulverförmigen Polymerteilchen nach den Ansprüchen 15 bis 17 als Träger von Substanzen zur Langzeitabgabe.

25. Verwendung der porösen, pulverförmigen Polymerteilchen nach Anspruch 24 zum Einsatz in der Land- und Forstwirtschaft sowie im Gartenbau.

26. Verwendung nach Anspruch 25 also Träger von Duftstoffen.

27. Verwendung nach Anspruch 26 also Träger von Sexuallockstoffen für Insekten.

28. Verwendung der porösen, pulverförmigen Polymerteilchen nach den Ansprüchen 15 bis 17 als Betonadditive.

**Revendications**

1. Procédé de préparation de particules de polymère pulvérulentes, poreuses, caractérisé en ce qu'on amène dans un lit de particules de substances solides un mélange homogène d'au moins deux constituants, un des constituants étant un polymère fusible et l'autre constituant un liquide inerte vis-à-vis du polymère, les deux constituants formant un système binaire, qui présente à l'état d'agrégat liquide un domaine de miscibilité complète et un domaine de non-miscibilité, à une température supérieure à la température de démixtion, en ce qu'on refroidit à une température inférieure à la température de solidification du polymère dans le mélange, en ce qu'on broie la masse en forme de gâteau ainsi obtenue et en ce qu'on sépare la substance polymère du liquide inerte et des particules de substances solides.

2. Procédé selon la revendication 1, caractérisé en ce qu'on utilise un lit de particules de substances solides constituées de particules ayant une taille de 50 à 5000 micromètres.

3. Procédé selon l'une des revendications 1 et 2, caractérisé en ce qu'on utilise un lit de particules de substances solides constituées de petites billes de verre.

4. Procédé selon l'une quelconque des revendications 1 à 2, caractérisé en ce qu'on utilise comme particules de substances solides un sel.

5. Procédé selon la revendication 4, caractérisé en ce qu'on utilise comme sel du sulfate de sodium.

6. Procédé selon la revendication 5, caractérisé en ce qu'on utilise du sulfate de sodium ayant une granulométrie de 50 à 400 micromètres.

7. Procédé selon les revendication 1 à 6, caractérisé en ce qu'on utilise comme polymère du polypropylène.

8. Procédé selon la revendication 7, caractérisé en ce qu'on utilise comme polymère du polypropylène et comme liquide inerte de la N,N-bis-(2-hydroxyéthyl)-hexadécylamine. ·

9. Procédé selon la revendication 3, caractérisé en ce qu'on extrait le liquide inerte du gâteau obtenu, en ce qu'on broie le gâteau et en ce qu'on soumet les petites billes de verre et les particules de polymère à un tri sur la base de leur différence de densité.

10. Procédé selon la revendication 9, caractérisé en ce qu'on effectue le tri par mise en suspension dans l'eau.

11. Procédé selon la revendication 1, caractérisé en ce qu'on broie d'abord le gâteau obtenu, puis en ce qu'on l'extrait.

12. Procédé selon la revendication 1, caractérisé en ce qu'on broie et extrait simultanément le gâteau obtenu.

13. Procédé selon la revendication 1, caractérisé en ce qu'on extrait le gâteau obtenu, on dissout les particules de substances solides et on broie le gâteau simultanément.

14. Procédé selon l'une quelconque des revendications 1 à 13, caractérisé en ce qu'on sépare les particules de polymère, pulvérulentes, poreuses, après séparation du liquide inerte et des particules de substances solides par tamisage, en fractions granulométriques.

15. Particules de polymère poreuses, pulvérulentes, obtenues selon un procédé conformé aux revendications 1 à 14.

16. Particules de polymère poreuses, pulvérulentes, ayant une densité apparente de 0,1 à 0,3 g/cm³, un volume de pores accessibles de l'extérieur supérieur à 50, de préférence supérieur à 70 % et une granulométrie de 50 à 700 micromètres.

17. Particules de polymère poreuses, pulvérulentes, selon les revendications 1 à 16, caractérisées par une granulomètrie de 50 à 100 micromètres.

18. Utilisation des particules poreuses, pulvérulentes selon les revendications 15 à 17, pour la séparation de substances hydrophobes à partir de systèmes aqueux.

19. Utilisation des particules de polymères poreuses, pulvérulentes, selon la revendication 18, pour la séparation d'huile.

20. Utilisation des particules de polymère poreuses, pulvérulentes selon les revendications 15 à 17, pour l'absorption de liquides.

21. Utilisation des particules de polymère poreuses pulvérulentes selon la revendication 20, comme liant pour huile.

22. Utilisation des particules de polymère poreuses, pulvérulentes selon les revendications 15 à 17, comme additif pour peintures.

23. Utilisation des particules de polymère poreuses, pulvérulentes, selon la revendication 22, comme additif pour peintures protectrices.

24. Utilisation des particules de polymère poreuses, pulvérulentes selon les revendications 15 à 17 comme supports de substances pour la libération sur une longue durée.

25. Utilisation des particules de polymère poreuses, pulvérulentes selon la revendication 24, pour l'utilisation en agriculture et en sylviculture ainsi qu'en horticulture.

26. Utilisation selon la revendication 25, comme support de parfums.

27. Utilisation selon la revendication 26, comme supports de substances d'attraction sexuelle pour des insectes.

28. Utilisation des particules de polymère poreuses, pulvérulentes selon les revendications 15 à 17, comme additifs pour le béton.

## Claims

1. A process for the production of powder-form porous polymer particles, characterized in that a homogeneous mixture of at least two components, one component being a fusible polymer and the other component being a liquid inert to the polymer and both components forming a binary system which, in the liquid aggregate state, has a region of complete miscibility and a region with a miscibility gap, is introduced into a bed of particulate solids at a temperature above the separation temperature, cooled to a temperature below the solidification temperature of the polymer in the mixture and the cake-like mass obtained is size-reduced and the polymeric material separated from the inert liquid and the particulate solid.

2. A process as claimed in Claim 1, characterized in that a bed of particulate solids having a particle size of from 50 to 5000 μm is used.

3. A process as claimed in Claims 1 and 2, characterized in that the bed of particulate solids consists of glass beads.

4. A process as claimed in Claims 1 and 2, characterized in that a salt is used as the particulate solid.

5. A process as claimed in Claim 4, characterized in that sodium sulfate is used as the salt.

6. A process as claimed in Claim 5, characterized in that sodium sulfate having a particle size of from 50 to 400 μm is used.

7. A process as claimed in Claims 1 to 6, characterized in that polypropylene is used as the polymer.

8. A process as claimed in Claim 7, characterized in that polypropylene is used as the polymer and N,N-bis-(2-hydroxyethyl)-hexadecylamine as the inert liquid.

9. A process as claimed in Claim 3, characterized in that the inert liquid is extracted from the cake obtained, the cake is size-reduced and the glass beads and the polymer particles are sifted on the basis of their differences in diameter.

10. A process as claimed in Claim 9, characterized in that sifting is carried out by suspension in water.

11. A process as claimed in Claim 1, characterized in that the cake obtained is first size-reduced and then extracted.

12. A process as claimed in Claim 1, characterized in that the cake obtained is size-reduced and extracted at the same time.

13. A process as claimed in Claim 1, characterized in that the cake obtained is extracted, the particulate solid dissolved and the cake size-reduced at one and the same time.

14. A process as claimed in Claims 1 to 13, characterized in that, after separation of the inert liquid and the particulate solid, the polymeric, powder-form porous particles are divided into particle-size fractions by sieving.

15. Porous, powder-form polymer particles obtained by the process claimed in Claims 1 to 14.

16. Porous, powder-form polymer particles having an apparent density of from 0.1 to 0.3 g/cc, a cell volume accessible from outside of more than 50% and preferably of more than 70% and a particle size of from 50 to 700 μm.

17. Porous, powder-form polymer particles as claimed in Claims 1 to 16, characterized by a particle size of from 50 to 100 μm.

18. The use of the porous, powder-form polymer particles claimed in Claims 15 to 17 for separating hydrophobic substances from aqueous systems.

19. The use of porous, powder-form polymer particles as claimed in Claim 18 for separating oil.

20. The use of the porous, powder-form polymer particles claimed in Claims 15 to 17 for absorbing liquids.

21. The use of porous, powder-form polymer particles as claimed in Claim 20 as an oil binder.

22. The use of the porous, powder-form polymer particles claimed in Claims 15 to 17 as an additive for paints.

23. The use of porous, powder-form polymer particles as claimed in Claim 22 as an additive for protective paints.

24. The use of the porous, powder-form polymer particles claimed in Claims 15 to 17 as a carrier for substances for sustained release.

25. The use of porous, powder-form polymer particles as claimed in Claim 24 in agriculture and forestry and in horticulture.

26. The use claimed in Claim 25 as a carrier for perfumes.

27. The use claimed in Claim 26 as a carrier for sexual lures for insects.

28. The use of the porous, powder-form polymer particles claimed in Claims 15 to 17 as concrete additives.